# EUROPEAN PATENT SPECIFICATION

(11) **EP 2 922 178 B1**
(45) Date of publication and mention of the grant of the patent: **04.12.2019**
(21) Application number: 15151623.4
(22) Date of filing: 19.01.2015
(51) Int. Cl.: H02K 1/27

(54) **Motor**
Motor
Moteur

(30) Priority: 18.03.2014 JP 2014055035
(43) Date of publication of application: 23.09.2015
(73) Proprietor: Nidec Corporation, Kyoto 601-8205 (JP)
(72) Inventor: Ueda, Tomoya, Minami-ku, Kyoto 601-8205 (JP)
(74) Representative: Stöckeler, Ferdinand

(56) References cited:
- EP-A2- 2 568 578
- EP-A2- 2 592 718
- DE-A1-102010 029 248
- DE-A1-102012 218 351

## Description

### BACKGROUND OF THE INVENTION

### 1. Field of the Invention

The present invention relates to an electric motor.

### 2. Description of the Related Art

A spoke-type interior permanent magnet (IPM) motor, in which magnets each having a rectangular cross section perpendicular to a central axis of the motor are arranged in a radial manner in a rotor core, is known. In such a spoke-type motor, each magnet is magnetized such that long-side surfaces of the magnet have magnetic poles, and magnetic poles of the same polarity are arranged opposite to each other between circumferentially adjacent ones of the magnets. In the spoke-type IPM motor, flux barriers are provided to direct magnetic flux toward a stationary portion of the motor, so that operating efficiency is improved.

DE 10 2010 029248 A1 discloses an electric motor comprising a stator having twelve stator teeth as well as a rotor having ten rotor poles, the rotor poles being spaced apart from each other by an air gap and embodied as sinus poles. Flux barriers are provided at inner corners of permanent magnets of the rotor.

EP 2 568 578 A2 teaches a motor including a stator having stator cores and a rotor disposed at an inner side of the plurality of stator cores. The rotor includes a sleeve, a plurality of rotor cores arranged in a circumferential direction of the rotor, a plurality of bridges arranged to connect the sleeve to each of the plurality of rotor cores, a plurality of permanent magnets provided between the rotor cores to form an interior space with respect to the sleeve while being spaced apart from the sleeve, and a plurality of support protrusions protruding from the sleeve in an outward radial direction of the sleeve to support the plurality of permanent magnets while corresponding to the plurality of permanent magnets, respectively, the plurality of support protrusions being arranged between the bridges while being spaced apart from the bridges in the circumferential direction of the rotor.

EP 2 592 718 A2 discloses a rotor core including a pair of magnet openings disposed such that a space therebetween widens toward an outer peripheral side and in which a pair of permanent magnets having a magnetic pole direction relative to a radial direction identical to each other are inserted. The magnet openings each have a shape that connects together a first opening portion formed along the profile of the corresponding permanent magnet and a second opening portion that, when the permanent magnet is inserted in the first opening portion, covers, out of corner portions of the permanent magnet, a corner portion closest to the other permanent magnet with an air gap defined therebetween. Between the second opening portions of adjacent magnet openings a bridge portion is formed.

For example, in a rotor illustrated in FIG. 5 of JP-A 2001-211582, flux barriers which are cut portions each of which has a circumferential extent are provided between an outer circumference of a rotor and a radially outer end portion of each of permanent magnets. Thus, a short circuit of magnetic flux is prevented, and an improvement in a magnet torque and a reduction in a loss due to an eddy current are achieved. In addition, flux barriers which are a pair of holes are provided at a radially inner end portion of each magnet. Meanwhile, in a rotor illustrated in FIG. 3 of US 2011/0290581, spaces are arranged radially inside each of permanent magnets arranged in a spoke-like configuration such that the spaces adjoin two radially inner corners of each magnet.

### SUMMARY OF THE INVENTION

Here, in order to miniaturize the spoke-type IPM motor, it is necessary to arrange the magnets radially inward. However, simply arranging the magnets radially inward would increase a leakage of magnetic flux into the flux barriers, and might permit magnetic flux to flow radially inward. This would cause a reduction in output of the motor even with use of the same magnets. This problem is also shared by IPM motors which are not of a spoke type.

The invention provides a motor according to claim 1.

According to embodiments of the present invention, it is possible to achieve a reduction in the size of the motor with a limited reduction in output of the motor.

### BRIEF DESCRIPTION OF THE DRAWINGS

FIG. 1 is a vertical cross-sectional view of a motor according to a preferred embodiment of the present invention.
FIG. 2 is a plan view illustrating a stator core, a rotor core, and magnets according to a comparative example.
FIG. 3 is a perspective view illustrating the rotor core and the magnets.
FIG. 4 is a plan view illustrating the rotor core and the magnets.
FIG. 5 is a diagram illustrating the rotor core and the magnets in an enlarged form.
FIG. 6 is a diagram illustrating flux barriers and their vicinity according to another comparative example.
FIG. 7 is a plan view illustrating a rotor core and magnets according to another comparative example.
FIG. 8 is a diagram illustrating a portion of the rotor core and some of the magnets in an enlarged form.
FIG. 9 is a diagram illustrating a first flux barrier pair and its vicinity according to another comparative example in an enlarged form.
FIG. 10 is a diagram illustrating a first flux barrier pair according to another comparative example of the present invention.
FIG. 11 is a diagram illustrating a first flux barrier pair according to a preferred embodiment of the present invention.
FIG. 12 is a diagram illustrating a flux barrier according to another comparative example.

### DETAILED DESCRIPTION OF THE PREFERRED EMBODIMENT AND COMPARATIVE EXAMPLES

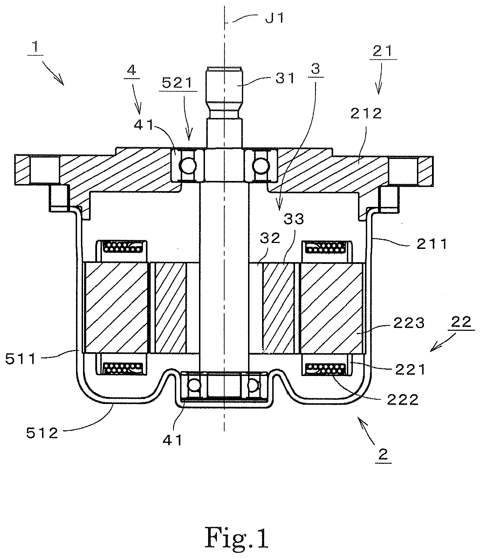

It is assumed herein that a vertical direction is defined as a direction in which a central axis of a motor extends, and that an upper side and a lower side along the central axis in Fig. 1 are referred to simply as an upper side and a lower side, respectively. It should be noted, however, that the above definitions of the vertical direction and the upper and lower sides should not be construed to restrict relative positions or directions of different members or portions when the motor is actually installed in a device. Also note that a direction parallel to the central axis is referred to by the term "axial direction", "axial", or "axially", that radial directions centered on the central axis are simply referred to by the term "radial direction", "radial", or "radially", and that a circumferential direction about the central axis is simply referred to by the term "circumferential direction", "circumferential", or "circumferentially".

FIG. 1 is a vertical cross-sectional view of a motor 1 according to a preferred embodiment of the present invention. In FIG. 1, parallel oblique lines for details of a section of the motor 1 are omitted. The motor 1 is a rotary electrical machine. The motor 1 is of an inner-rotor type. The motor 1 includes a stationary portion 2, a rotating portion 3, and a bearing mechanism 4. The bearing mechanism 4 is arranged to support the rotating portion 3 such that the rotating portion 3 is rotatable about a central axis J1 of the motor 1 with respect to the stationary portion 2.

The stationary portion 2 is arranged around the rotating portion 3. The stationary portion 2 includes a housing 21 and a stator 22. The housing 21 includes a housing member 211 and a cover member 212. The housing member 211 has a bottom and is substantially cylindrical. The housing member 211 includes a cylindrical portion 511 and a bottom portion 512. The cover member 212 is substantially rectangular, and is attached to a top portion of the cylindrical portion 511. The cover member 212 includes an opening 521 in a center thereof. The stator 22 includes a stator core 223, an insulator 221, and coils 222. Teeth of the stator core 223 are covered with the insulator 221. Each coil 222 is arranged on the insulator 221. The rotating portion 3 is caused to rotate about the central axis J1 through supply of power to the stationary portion 2.

The bearing mechanism 4 includes two bearings 41. According to the present preferred embodiment, each bearing 41 is a ball bearing. Note that the bearings 41 may alternatively have another structure. One of the bearings 41 is fixed to the cover member 212 in the opening 521. The other bearing 41 is fixed to the bottom portion 512.

The rotating portion 3 includes a shaft 31, a rotor core 32, and a plurality of magnets 33. The shaft 31 is centered on the central axis J1. The shaft 31 is supported through the bearing mechanism 4 to be rotatable about the central axis J1. The rotor core 32 is substantially cylindrical, and is fixed to an outer circumference of the shaft 31. Each magnet 33 is a permanent magnet. The rotor core 32 is arranged radially inside of the stator 22. An outer circumferential surface of the rotor core 32 is arranged in proximity to an inner circumferential surface of the stator 22.

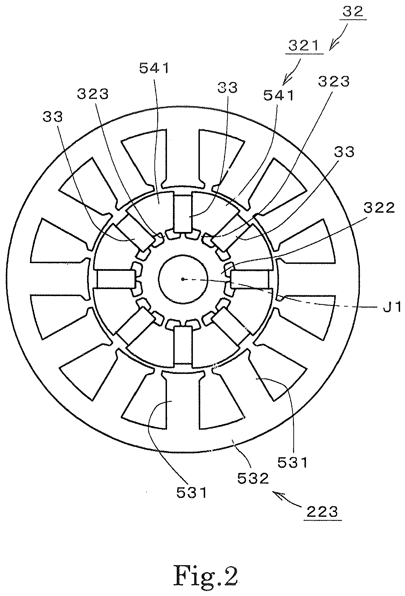

FIG. 2 is a plan view illustrating a comparative example of the stator core 223, the rotor core 32, and the magnets 33. The stator core 223 includes a plurality of teeth 531 and a core back 532. The core back 532 is annular and is centered on the central axis J1. Each of the teeth 531 is arranged to extend radially inward from the core back 532 toward the rotor core 32. The stator core 223 is defined by laminated electromagnetic steel sheets.

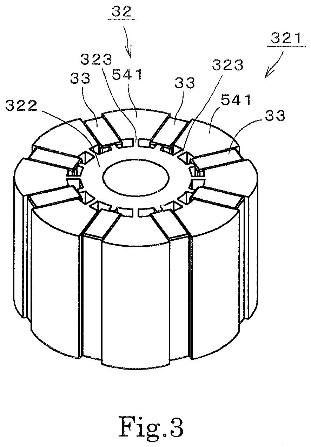

FIG. 3 is a perspective view illustrating the rotor core 32 and the magnets 33. The rotor core 32 is defined by laminated electromagnetic steel sheets. Referring to FIGS. 2 and 3, the rotor core 32 includes an outer core portion 321, an inner core portion 322, and a plurality of joining portions 323. The outer core portion 321 includes a plurality of outer core elements 541. The outer core elements 541 are arranged in a circumferential direction. The inner core portion 322 is arranged radially inside of the outer core portion 321. Each outer core element 541 is joined to the inner core portion 322 through one of the joining portions 323. Each joining portion 323 is arranged to extend in a radial direction. The outer core portion 321, the inner core portion 322, and the joining portions 323 are defined by a single continuous monolithic member.

An outer circumferential surface of each outer core element 541 is convex, with a circumferential middle thereof being radially outward of both circumferential ends thereof. The outer circumferential surface of each outer core element 541 is arranged to have a radius of curvature smaller than a maximum radius of the outer core portion 321. By arranging the outer circumferential surface of each outer core element 541 to be convex, with the circumferential middle thereof being radially outward of both circumferential ends thereof, a condition of flow of magnetic flux toward the stator 22 is improved, and an induced voltage waveform of the motor 1 is made closer to a sine wave. Each joining portion 323 is arranged to join a circumferential middle of a radially inner portion of a corresponding one of the outer core elements 541 to an outer circumferential surface of the inner core portion 322.

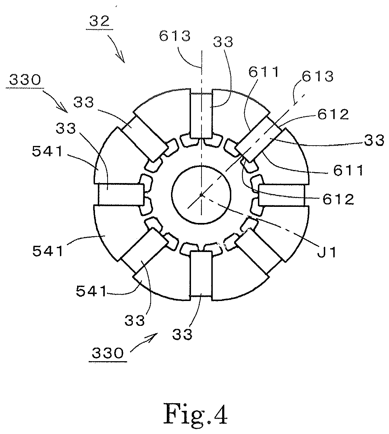

FIG. 4 is a plan view of the rotor core 32 and the magnets 33. The magnets 33 are arranged between the outer core elements 541. The magnets 33 are arranged at regular intervals in the circumferential direction. The rotor core 32 is arranged to hold each magnet 33. Each magnet 33 includes a pair of long sides 611 and a pair of short sides 612 in a cross section perpendicular to the central axis J1. A center line 613 between the pair of long sides 611 of each magnet 33 passes through the central axis J1. That is, the center lines 613 of all the magnets 33 intersect one another at the central axis J1. The motor 1 is a spoke-type IPM motor.

The pair of long sides 611 of each magnet 33 are magnetized to have mutually different polarities. Between adjacent ones of the magnets 33, magnetic poles of the same polarity are arranged circumferentially opposite to each other. This arrangement causes some magnetic lines of flux to be directed radially outwardly of the rotor core 32 from the long sides 611 opposed to each other through the outer circumferential surface of the outer core element 541 between the long sides 611, and then to enter back into the rotor core 32 through the outer circumferential surfaces of the adjacent outer core elements 541 on both sides to enter opposite magnetic poles. Of the plurality of magnets 33, pairs of two adjacent magnets 33, each pair having an identical structure, are repetitively arranged in the circumferential direction. Therefore, each of such pairs of two adjacent magnets 33 will be hereinafter referred to as a "magnet pair" 330. According to the comparative example illustrated in FIG. 4, four such magnet pairs 330 are arranged in the circumferential direction. Each outer core element 541 functions as a magnetic pole portion in relation to the stator 22.

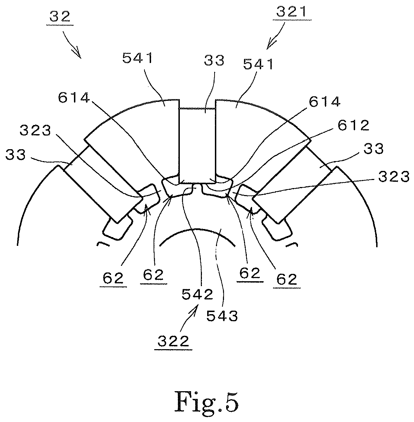

FIG. 5 is a diagram illustrating the rotor core 32 and the magnets 33 in an enlarged form. As described above, the outer core portion 321 and the inner core portion 322 are joined to each other through the plurality of joining portions 323. Flux barriers 62 are arranged on both circumferential sides of each joining portion 323 between the outer core element 541 and the inner core portion 322. Each flux barrier 62 is a space in which neither any portion of the rotor core 32 nor any portion of any magnet 33 exists. In other words, the outer core portion 321 is arranged radially outside of the flux barriers 62, while the inner core portion 322 is arranged radially inside of the flux barriers 62. Each joining portion 323 is arranged between a pair of the flux barriers 62 between a separate pair of adjacent ones of the magnets 33. According to the comparative example, each flux barrier 62 is an air space. Because the air space has a magnetic permeability lower than that of the rotor core 32, each flux barrier 62 interferes with flow of magnetic flux.

Note that each flux barrier 62 may not necessarily be a space in which air exists, as long as the flux barrier 62 is a space that has a magnetic reluctance greater than that of any other portion of the rotor core 32. For example, a substance other than air may exist in each flux barrier 62. The same is true of any other flux barrier described below.

Two corners 614 of each magnet 33 which are continuous with one of the short sides 612 of the magnet 33 which is the closer to the central axis J1 are arranged in separate ones of the flux barriers 62. A magnet support portion 542 is arranged between two of the flux barriers 62 which adjoin each magnet 33. Hereinafter, each magnet support portion 542 is assumed to be a portion of the inner core portion 322. The entire inner core portion 322 excluding the magnet support portions 542 will be hereinafter referred to as an "inner core cylindrical portion" 543. Each magnet support portion 542 is arranged to project radially outward from the inner core cylindrical portion 543, and a top of the magnet support portion 542 is arranged to be in contact with the short side 612 of a corresponding one of the magnets 33. In other words, the flux barriers 62 are spaces surrounded by the outer core elements 541, the joining portions 323, the inner core cylindrical portion 543, the magnets 33 and the magnet support portions 542.

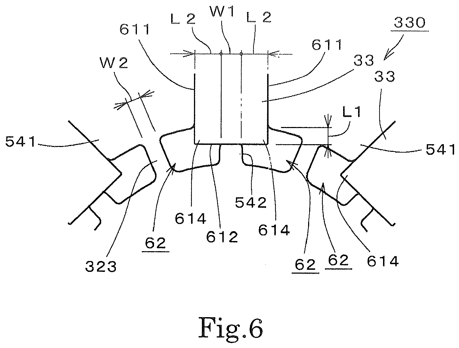

FIG. 6 is a diagram illustrating some of the flux barriers 62 and their vicinity. Since each corner 614 of each magnet 33 is arranged in one of the flux barriers 62, end points of a boundary between the flux barrier 62 and the magnet 33 lie on one of the long sides 611 which includes the corner 614 and one of the short sides 612 which includes the corner 614. Regarding each flux barrier 62, the length L1 of a portion of the long side 611 which lies in the flux barrier 62 is shorter than the length L2 of a portion of the short side 612 which lies in the flux barrier 62. A reduction in an extent to which the long side 611 is exposed in the flux barrier 62 makes it possible to efficiently direct magnetic flux from the magnet 33 into the outer core element 541 while reducing a leakage of magnetic flux into the flux barrier 62. Meanwhile, an increase in an extent to which the short side 612 is exposed in the flux barrier 62 contributes to reducing flow of magnetic flux toward the short side 612.

As a result, a greater amount of magnetic flux is directed radially outwardly of the outer core element 541, and this leads to improved output of the motor 1 with the size of the motor 1 remaining the same. In other words, it is possible to reduce the size of the motor 1 with a limited reduction in the output of the motor 1. Note that the output in question here may be either a torque or the amount of energy per unit time. In addition, even if the size of the motor 1 is reduced, the flux barriers 62 can be easily provided when the corners 614 of the magnets 33 are arranged in the flux barriers 62.

If the length L1 of the portion of the long side 611 which lies in the flux barrier 62 were too short, a leakage of the magnetic flux into the flux barrier 62 would be significant. Therefore, the length L1 is preferably arranged to be in the range of 10% inclusive to 20% exclusive of the length of the long side 611.

As the length L2 of the portion of the short side 612 which lies in the flux barrier 62 increases, the length W1 (hereinafter referred to as the "contact length" W1 as appropriate) of an area over which the magnet support portion 542 and the short side 612 are in contact with each other decreases. The shorter the contact length W1 is, the more greatly the number of loops of magnetic lines of flux of a magnetic field of the magnet 33 itself which do not contribute to the torque is reduced, and the more greatly the leakage of the magnetic flux into the flux barrier 62 is reduced. On the other hand, the contact length W1 does not need to be extremely reduced, because performance of the motor 1 is not significantly affected by an increase in the contact length W1. In addition, it is desirable that the contact length W1 should have a reasonable magnitude so that the magnet 33 can be supported from radially inward. Note that the contact length W1 refers to the length of the area over which the magnet support portion 542 and the short side 612 are actually in contact with each other, and does not refer to a maximum width of the magnet support portion 542. The contact length W1 is preferably arranged to be half or less than half the length of the short side 612.

It is desirable that each joining portion 323 should have a small width in order to reduce flow of magnetic flux into the inner core portion 322. A small width of the joining portion 323 makes it easier for the joining portion 323 to reach magnetic saturation to block additional magnetic flux. The minimum width W2 of the joining portion 323 as measured in the circumferential direction, that is, the minimum width of the joining portion 323 as measured in a direction perpendicular to a center line of the joining portion 323 extending in a radial direction, is preferably arranged to be equal to or smaller than the length of the short side 612. In actual design, the minimum width W2 can be made significantly smaller than the length of the short side 612, and the minimum width W2 is more preferably arranged to be half or less than half the length of the short side 612. This arrangement makes it possible to achieve a reduction in the size of the motor 1 with a limited reduction in the output of the motor 1.

Each joining portion 323 is preferably elongated, and is arranged to have a radial dimension greater than the circumferential width thereof. Here, it is assumed here that the radial dimension of the joining portion 323 corresponds to the radial width of the flux barrier 62, and that the circumferential width of the joining portion 323 is the minimum width W2. The minimum width W2 of the joining portion 323 is preferably smaller than the contact length W1, i.e., the length of the area over which the magnet support portion 542 and the short side 612 are in contact with each other, since the minimum width W2 of the joining portion 323 produces a greater effect on unwanted flow of magnetic flux than does the contact length W1. Further, because the minimum width W2 of the joining portion 323 is smaller than the contact length W1, the joining portion 323 reaches magnetic saturation because of magnetic flux passing from the outer core portion 321 to the inner core portion 322 or magnetic flux passing from the inner core portion 322 to the outer core portion 321, and magnetic lines of flux are greatly directed radially outwardly of the outer core element 541 without permitting magnetic lines of flux to pass from the long side 611 of the magnet 33 to the inner core portion 322. This results in an improvement in the output of the motor 1.

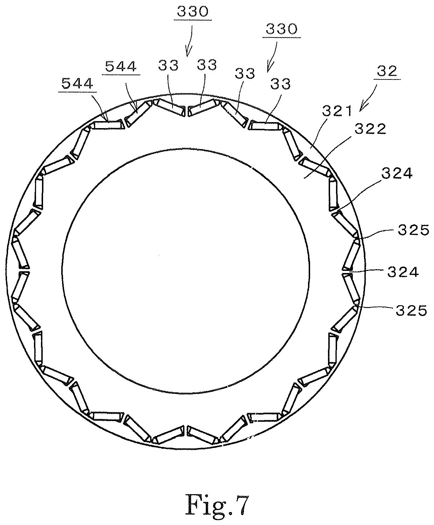

FIG. 7 is a plan view illustrating a rotor core 32 and magnets 33 according to another comparative example. In FIG. 7, sixteen pairs of magnets 33 are provided, that is, the number of magnets 33 is thirty-two. A stator not shown includes a greater number of teeth than the number of teeth 531 in FIG. 2. The rotor core 32 includes an inner core portion 322, an outer core portion 321, a plurality of first joining portions 324, and a plurality of second joining portions 325. The structure of a motor according to this comparative exampleis similar to the structure of the motor 1 illustrated in FIG. 1 except in that the shape of the rotor core 32 and arrangement of the magnets 33 are different. Members or portions that have their equivalents in the above-described preferred example illustrated in FIGS. 1 to 6 will be denoted by the same reference numerals as those of their equivalents in the above-described example. In addition, every pair of adjacent ones of the magnets 33 which extend away from each other while extending radially outward will be referred to as one magnet pair 330.

The outer core portion 321 is arranged radially outside of the inner core portion 322. The outer core portion 321 and the inner core portion 322 are joined to each other through the plurality of first joining portions 324 and the plurality of second joining portions 325. The outer core portion 321, the inner core portion 322, the first joining portions 324, and the second joining portions 325 are defined by a single continuous monolithic member. The magnets 33 are inserted in magnet holding holes 544 defined in the rotor core 32. Each magnet holding hole 544 extends in an axial direction.

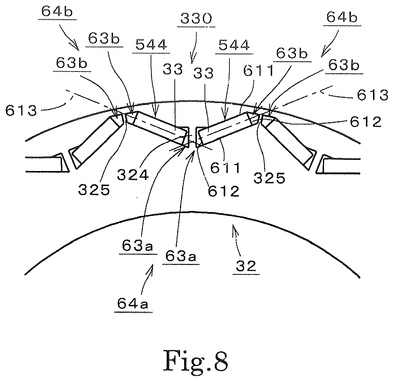

FIG. 8 is a diagram illustrating a portion of the rotor core 32 and some of the magnets 33 in an enlarged form. As with the magnets 33 illustrated in FIG. 4, each magnet 33 includes a pair of long sides 611 and a pair of short sides 612 in a cross section perpendicular to a central axis J1. The pair of long sides 611 of each magnet 33 are magnetized to have mutually different polarities. Within each magnet pair 330, magnetic poles of the same polarity are arranged circumferentially opposite to each other. Between adjacent ones of the magnet pairs 330, magnetic poles of opposite polarities are arranged circumferentially opposite to each other. Accordingly, when the rotor core 32 is viewed from radially outside, the polarity of magnetic poles facing radially outward and arranged in the circumferential direction is reversed every magnet pair 330.

Within each magnet pair 330, a center line 613 between the pair of long sides 611 of one of the magnets 33 and a center line 613 between the pair of long sides 611 of the other magnet 33 intersect each other at a point between the central axis J1 and the magnet pair 330 in a cross section perpendicular to the central axis J1. That is, each magnet pair 330 is arranged in the shape of the letter "V", with two arms of the letter "V" being open more widely than they would be if they extended in radial directions centered on the central axis J1.

Flux barriers 63a and 63b are arranged near both short sides 612 of each magnet 33. The flux barriers 63a arranged between the two magnets 33 which together define each magnet pair 330 will be hereinafter referred to as "first flux barriers" 63a, while the flux barriers 63b arranged circumferentially outside of each magnet pair 330 will be hereinafter referred to as "second flux barriers" 63b. Each of the first flux barriers 63a and the second flux barriers 63b is a portion of one of the magnet holding holes 544.

Each of the first joining portions 324 is arranged between adjacent ones of the first flux barriers 63a. The adjacent ones of the first flux barriers 63a will be hereinafter referred to collectively as a "first flux barrier pair" 64a. Each second joining portion 325 is arranged between adjacent ones of the second flux barriers 63b between adjacent ones of the magnet pairs 330. The adjacent ones of the second flux barriers 63b will be hereinafter referred to collectively as a "second flux barrier pair" 64b.

The outer core portion 321 is arranged radially outside of the first flux barrier pairs 64a, each of which adjoins a separate one of the magnet pairs 330, and radially outside of the second flux barrier pairs 64b. The inner core portion 322 is arranged radially inside of the first flux barrier pairs 64a and radially inside of the second flux barrier pairs 64b. Each first flux barrier pair 64a contributes to reducing flow of magnetic flux into the inner core portion 322, whereas each second flux barrier pair 64b contributes to preventing a short circuit of magnetic flux within the rotor core 32. Thus, a greater amount of magnetic flux is directed radially outwardly of the rotor core 32.

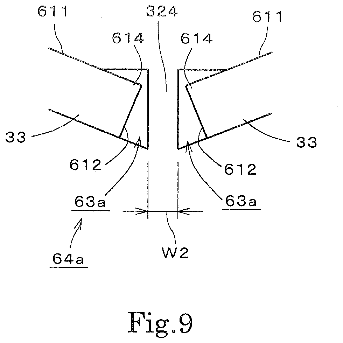

FIG. 9 is a diagram illustrating one of the first flux barrier pairs 64a and its vicinity in an enlarged form. In a rotating portion 3 according to this comparative example, a corner 614 of each of the magnets 33 of each magnet pair 330, the corner 614 lying on a short-side side closer to the central axis J1 and on a side closer to the other magnet 33 of the same magnet pair 330, is arranged in a separate one of the first flux barriers 63a. End points of a boundary between each magnet 33 and a corresponding one of the first flux barriers 63a lie on one of the long sides 611 which includes the corner 614 and one of the short sides 612 which includes the corner 614 (in the case of FIG. 9, on an end point of the short side 612). The above arrangement contributes to preventing magnetic flux from passing from the long side 611 facing an outer circumference of the rotor core 32 toward the inner core portion 322, making it possible to efficiently direct the magnetic flux radially outwardly of the outer core portion 321. As a result, in the case where the magnets 33 are arranged in the shape of the letter "V", even if the radially outer long sides 611 of the two magnets 33 of each magnet pair 330 define a large angle therebetween, it is possible to achieve a reduction in the size of the motor 1 with a limited reduction in output of the motor 1.

In addition, as is similarly the case with the above-described comparative example illustrated in FIG. 6, a minimum width W2 of each first joining portion 324 is arranged to be smaller than the length of each short side 612. More preferably, the minimum width W2 of each first joining portion 324 is arranged to be half or less than half the length of each short side 612. Each first joining portion 324 is preferably arranged to have a small width, and the first joining portion 324 is arranged to have a radial dimension greater than the circumferential width thereof. These conditions also contribute to reducing flow of magnetic flux into the inner core portion 322, and achieving a reduction in the size of the motor 1. Definitions of the radial dimension and the circumferential width of the first joining portion 324 are similar to definitions of the radial dimension and the circumferential width, respectively, of the joining portion 323 illustrated in FIG. 6.

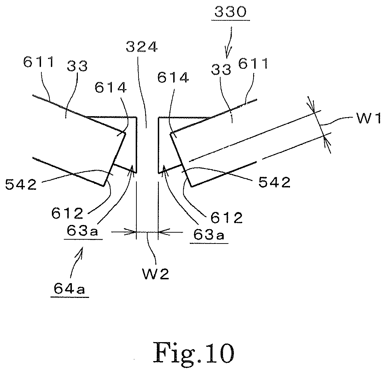

FIG. 10 is a diagram illustrating a first flux barrier pair 64a according to another comparative example. Also in the comparative example illustrated in FIG. 10, end points of a boundary between a first flux barrier 63a and a magnet 33 lie on a long side 611 which includes a corner 614 and on a short side 612 which includes the corner 614. A portion of an inner core portion 322 which is in contact with the short side 612 functions as a magnet support portion 542. Thus, the magnet 33 is securely held.

Also in the comparative example illustrated in FIG. 10, the length W1 (hereinafter referred to as the "contact length" W1 as appropriate) of an area over which the magnet support portion 542 and the short side 612 of the magnet 33 are in contact with each other may have a reasonable magnitude, and therefore, the minimum width W2 of a first joining portion 324 measured in the circumferential direction is preferably arranged to be smaller than the contact length W1, i.e., the length of the area over which the magnet support portion 542 and the short side 612 are in contact with each other. As is similarly the case with the length L1 illustrated in FIG. 6, the length of a portion of the long side 611 which lies in the first flux barrier 63a is preferably arranged to be in the range of 10% inclusive to 20% exclusive of the length of the long side 611.

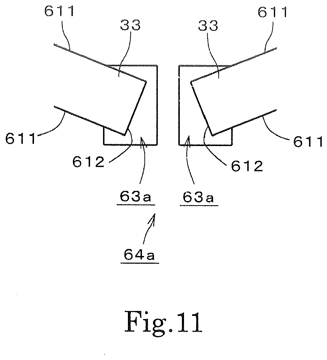

FIG. 11 is a diagram illustrating a first flux barrier pair 64a according to a preferred embodiment of the present invention. In the preferred embodiment illustrated in FIG. 11, end points of a boundary between a first flux barrier 63a and a corresponding magnet 33 lie on two long sides 611 of the magnet 33. A short side 612 of the magnet 33 lies in the first flux barrier 63a in its entirety. In each of the example illustrated in Fig. 9 and the preferred embodiment illustrated in FIG 11, no magnet support portion 542 is provided, and therefore, the position of each magnet 33 in a corresponding magnet holding hole 544 is fixed by, for example, members attached to both axial ends of a rotor core 32. Absence of the magnet support portion 542 contributes to reducing the number of loops of magnetic lines of flux of a magnetic field of the magnet 33 itself which do not contribute to a torque and which enter the short side 612 of the magnet 33, and enables magnetic lines of flux to be greatly directed radially outwardly of an outer core element 541. As a result, an improvement in output of a motor 1 is achieved.

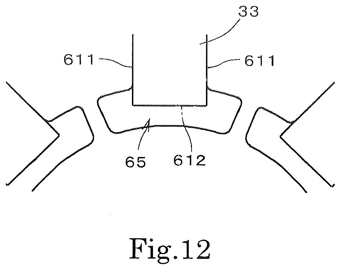

FIG. 12 is a diagram illustrating a flux barrier 65 according to a modification of the comparative example illustrated in FIG. 6. In FIG. 12, no magnet support portion 542 is provided. In the comparative example illustrated in FIG. 12, end points of a boundary between the flux barrier 65 and a corresponding magnet 33 lie on two long sides 611 of the magnet 33 as is similarly the case with the preferred embodiment illustrated in FIG. 11. A short side 612 of the magnet 33 lies in the flux barrier 65 in its entirety. It is apparent from FIGS. 11 and 12 that a structure illustrated in FIG. 12 corresponds to a modification of a structure illustrated in FIG. 11 in a special condition. Similarly, a structure illustrated in FIG. 6 can be regarded as a modification of a basic structure illustrated in FIG. 10.

In FIG. 10, if a center line between the long sides 611 of each magnet 33 is oriented radially, the first flux barrier pair 64a will be arranged between the two magnets 33 of each magnet pair 330. If the first flux barrier pair 64a is additionally arranged also between every adjacent ones of the magnet pairs 330, a structure equivalent to the structure illustrated in FIG. 6 results.

A further explanation is provided below. Referring to FIGS. 6 and 10, suppose that the magnet 33 in the middle in FIG. 6 corresponds to the magnet 33 on the left-hand side in FIG. 10. In this case, in FIG. 6, the magnet 33 in the middle and the magnet 33 on the right together define the magnet pair 330. Then, the two flux barriers 62 between these magnets 33 of the magnet pair 330 correspond to the two first flux barriers 63a in FIG. 10. The corner 614 of each of the magnets 33 of the magnet pair 330, the corner 614 lying on a short-side side closer to the central axis J1 and on a side closer to the other of the magnets 33, that is, each of the right corner 614 of the magnet 33 in the middle and the left corner 614 of the magnet 33 on the right in FIG. 6, is arranged in a separate one of the flux barriers 62 between the two magnets 33 of the magnet pair 330. End points of a boundary between each magnet 33 and a corresponding one of the flux barriers 62 lie on the long side 611 including the corner 614 and on the short side 612 including the corner 614.

In addition, another corner 614 of each of the magnets 33 of the magnet pair 330, the other corner 614 lying toward the central axis J1 and on a side away from the other of the magnets 33 of the magnet pair 330, is arranged in another one of the flux barriers 62. For example, in the case of the magnet 33 in the middle in FIG. 6, the other corner 614 on the left is arranged in another one of the flux barriers 62 than the flux barrier 62 in which the right corner 614 is arranged. End points of a boundary between this other one of the flux barriers 62 and the magnet 33 lie on the other one of the long sides 611 of the magnet 33, which includes the corner 614 on the left, and on the short side 612 which includes the corner 614 on the left. Such structures each including one magnet pair 330 and four flux barriers 62 are repetitively arranged in the circumferential direction. Therefore, another one of the joining portions 323 arranged to join the outer core portion 321 and the inner core portion 322 to each other is arranged between a pair of the flux barriers 62 which lie between every adjacent ones of the magnet pairs 330.

When the structure illustrated in FIG. 6 is viewed in the above manner, the outer core elements 541 lie between the two magnets 33 of each magnet pair 330 and between every adjacent ones of the magnet pairs 330.

To explain more concisely, the structure illustrated in FIG. 6 corresponds to a modification of the structure illustrated in FIG. 10 as modified such that the magnets 33 are arranged in a radial manner and the flux barriers are arranged on both sides of each magnet 33. A structure in which the flux barriers 62 are provided for each of the pair of long sides 611 of each magnet 33 is suitable for the spoke-type IPM motor.

Note that the motor 1 may be modified in a variety of manners.

The number of poles of the rotating portion 3 and the number of poles of the stationary portion 2 may be modified in a variety of manners. A variety of methods may be adopted to fix each of the magnets 33 to the rotor core 32. For example, each magnet 33 may be fixed to the rotor core 32 through an adhesive. A portion of the laminated electromagnetic steel sheets may be employed to fix the position of each magnet 33. The number of magnet pairs 330 may be any number greater than one.

Also note that other structural elements, such as the housing 21, the stator 22, and so on, may also be modified in a variety of manners. For example, the housing 21 may be defined by three or more members combined together.

Also note that features of the above-described preferred embodiment and the modifications thereof may be combined appropriately as long as no conflict arises.

Motors according to preferred embodiment of the present invention may be used as driving sources for a variety of applications.

## Claims

1. A motor (1) comprising:
a rotating portion (3) arranged to rotate about a central axis (J1);
a stationary portion (2) arranged around the rotating portion (3); and
a bearing mechanism (4) arranged to rotatably support the rotating portion (3); wherein
the rotating portion (3) includes:
a plurality of magnets (33) arranged in a circumferential direction; and
a rotor core (32) arranged to hold the plurality of magnets (33), and including flux barriers (63a, 63b) defined therein, the flux barriers (63a, 63b) including first flux barrier pairs (64a) each of which includes a pair of the flux barriers (63a);
the plurality of magnets (33) include two or more magnet pairs (330); wherein
each of the plurality of magnets (33) includes a pair of long sides (611) and a pair of short sides (612) in a cross section perpendicular to the central axis (J1), the pair of long sides (611) being magnetized to have mutually different polarities;
within each of the two or more magnet pairs (330), magnetic poles of a same polarity are arranged circumferentially opposite to each other, and a center line between the pair of long sides (611) of one of the magnets and a center line between the pair of long sides (611) of the other magnet intersect each other at a point between the central axis (J1) and the magnet pair (330) in a cross section perpendicular to the central axis (J1) ;
a first corner of each of the magnets (33) of each magnet pair (330), the first corner lying on a short-side closer to the other magnet (33) of the magnet pair (330), is arranged in a separate one of the flux barriers (63a, 63b) defined in the rotor core (32);
the rotor core (32) further includes:
an outer core portion (321) arranged radially outside of the first flux barrier pairs (64a), each first flux barrier pair (64a) adjoining a separate one of the magnet pairs (330);
an inner core portion (322) arranged radially inside of the first flux barrier pairs (64a); and
a joining portion (324) arranged to join the outer core portion (321) and the inner core portion (322) to each other between the pair of the flux barriers (63a) of each of the first flux barrier pairs (64a); and
the joining portion (324) is arranged to have a minimum circumferential width (W2) smaller than a length of each short side (612)
**characterized in that** end points of a boundary between each magnet (33) and a corresponding one of the flux barriers (63a, 63b) lie on one of the pair of long sides (611) which includes the first corner (614) and another one of the pair of long sides (611).

2. The motor according to claim 1, wherein the joining portion (324) is arranged to have a radial dimension greater than a circumferential width thereof.

## Patentansprüche

1. Ein Motor (1), der folgende Merkmale aufweist:
einen Drehabschnitt (3), der dazu angeordnet ist, sich um eine Mittelachse (J1) zu drehen;
einen ortsfesten Abschnitt (2), der um den Drehabschnitt (3) herum angeordnet ist; und
einen Lagermechanismus (4), der dazu angeordnet ist, den Drehabschnitt (3) auf drehbare Weise zu tragen; wobei
der Drehabschnitt (3) folgende Merkmale umfasst:
eine Mehrzahl von Magneten (33), die in einer Umfangsrichtung angeordnet sind; und
einen Rotorkern (32), der dazu angeordnet ist, die Mehrzahl von Magneten (33) zu halten, und in dem Flussbarrieren (63a, 63b) definiert sind, wobei die Flussbarrieren (63a, 63b) erste Flussbarrierenpaare (64a) umfassen, von denen jedes ein Paar der Flussbarrieren (63a) umfasst;
die Mehrzahl von Magneten (33) zwei oder mehr Magnetpaare (330) umfassen; wobei
jeder der Mehrzahl von Magneten (33) ein Paar langer Seiten (611) und ein Paar kurzer Seiten (612) in einem zu der Mittelachse (J1) senkrechten Querschnitt umfasst, wobei das Paar langer Seiten (611) dahin gehend magnetisiert ist, zueinander unterschiedliche Polaritäten aufzuweisen;
in jedem der zwei oder mehr Magnetpaare (330) Magnetpole einer selben Polarität umfangsmäßig einander gegenüberliegend angeordnet sind und eine Mittellinie zwischen dem Paar langer Seiten (611) eines der Magneten und eine Mittellinie zwischen dem Paar langer Seiten (611) des anderen Magneten einander an einem Punkt zwischen der Mittelachse (J1) und dem Magnetpaar (330) in einem zu der Mittelachse (J1) senkrechten Querschnitt schneiden;
eine erste Ecke jedes der Magneten (33) jedes Magnetpaares (330), wobei die erste Ecke auf einer kurzen Seite liegt, die sich näher bei dem anderen Magneten (33) des Magnetpaares (330) befindet, in einer separaten der in dem Rotorkern (32) definierten Flussbarrieren (63a, 63b) angeordnet ist;
der Rotorkern (32) ferner folgende Merkmale umfasst:
einen äußeren Kernabschnitt (321), der radial außerhalb der ersten Flussbarrierenpaare (64a) angeordnet ist, wobei jedes erste Flussbarrierenpaar (64a) an ein separates der Magnetpaare (330) angrenzt;
einen inneren Kernabschnitt (322), der radial innerhalb der ersten Flussbarrierenpaare (64a) angeordnet ist; und
einen Verbindungsabschnitt (324), der dazu angeordnet ist, den äußeren Kernabschnitt (321) und den inneren Kernabschnitt (322) zwischen dem Paar der Flussbarrieren (63a) jedes der ersten Flussbarrierepaare (64a) miteinander zu verbinden; und
der Verbindungsabschnitt (324) dazu angeordnet ist, eine Mindestumfangsbreite (W2) aufzuweisen, die geringer ist als eine Länge jeder kurzen Seite (612)
**dadurch gekennzeichnet, dass** Endpunkte einer Grenze zwischen jedem Magneten (33) und einer entsprechenden der Flussbarrieren (63a, 63b) auf einer des Paares langer Seiten (611), die die erste Ecke (614) umfasst, und auf einer anderen des Paares langer Seiten (611) liegen.

2. Der Motor gemäß Anspruch 1, bei dem der Verbindungsabschnitt (324) dazu angeordnet ist, eine radiale Abmessung aufzuweisen, die größer ist als eine Umfangsbreite desselben.

## Revendications

1. Moteur (1), comprenant:
une partie rotative (3) disposée de manière à tourner autour d'un axe central (J1);
une partie stationnaire (2) disposée autour de la partie rotative (3); et
un mécanisme de palier (4) disposé pour supporter de manière rotative la partie rotative (3);
dans lequel
la partie rotative (3) comporte:
une pluralité d'aimants (33) disposés dans une direction circonférentielle; et
un noyau de rotor (32) disposé de manière à maintenir la pluralité d'aimants (33), et comportant des barrières de flux (63a, 63b) y définies, les barrières de flux (63a, 63b) comportant des premières paires de barrières de flux (64a) comportant, chacune, une paire de barrières de flux (63a);
la pluralité d'aimants (33) comporte deux paires d'aimants ou plus (330);
dans lequel
chacun de la pluralité d'aimants (33) comporte une paire de côtés longs (611) et une paire de côtés courts (612) dans une section perpendiculaire à l'axe central (J1), la paire de côtés longs (611) étant magnétisée de manière à présenter des polarités différentes l'un de l'autre;
au sein de chacune des deux paires d'aimants ou plus (330), les pôles magnétiques d'une même polarité sont disposés de manière circonférentielle opposés l'un à l'autre, et une ligne centrale entre la paire de côtés longs (611) de l'un des aimants et une ligne centrale entre la paire de côtés longs (611) de l'autre aimant se croisent en un point situé entre l'axe central (J1) et la paire d'aimants (330) dans une section perpendiculaire à l'axe central (J1);
un premier angle de chacun des aimants (33) de chaque paire d'aimants (330), le premier angle se trouvant sur un côté court plus proche de l'autre aimant (33) de la paire d'aimants (330), est disposé dans l'une séparée des barrières de flux (63a, 63b) définies dans le noyau de rotor (32);
le noyau de rotor (32) comporte par ailleurs:
une partie de noyau extérieure (321) disposée radialement à l'extérieur des premières paires de barrières de flux (64a), chaque première paire de barrières de flux (64a) étant adjacente à l'une séparée des paires d'aimants (330);
une partie de noyau intérieure (322) disposée radialement à l'intérieur des premières paires de barrières de flux (64a); et
une partie de jonction (324) disposée de manière à joindre la partie de noyau extérieure (321) et la partie de noyau intérieure (322) l'une à l'autre entre la paire de barrières de flux (63a) de chacune des premières paires de barrières de flux (64a); et
la partie de jonction (324) est disposée de manière à présenter une largeur circonférentielle minimale (W2) inférieure à une longueur de chaque côté court (612),
**caractérisé par le fait que** les points d'extrémité d'une limite entre chaque aimant (33) et l'une correspondante des barrières de flux (63a, 63b) se situent sur l'un de la paire de côtés longs (611) qui comporte le premier angle (614) et un autre de la paire de côtés longs (611).

2. Moteur selon la revendication 1, dans lequel la partie de jonction (324) est disposée de manière à présenter une dimension radiale supérieure à sa largeur circonférentielle.
